# EUROPEAN PATENT APPLICATION

(11) **EP 2 605 207 A1**
(43) Date of publication of application: **19.06.2013**
(21) Application number: 11425300.8
(22) Date of filing: 16.12.2011
(51) Int. Cl.: G06Q 30/06

(54) **Computer system supporting interactive virtual tours and/or electronic commerce**

(71) Applicant: Di Tocco, Ignazio, 00040 Ardea (RM) (IT)
(72) Inventor: Di Tocco, Ignazio, 00040 Ardea (RM) (IT)
(74) Representative: Zizzari, Massimo

(57) **Abstract**

A computer system (10) able to allow interactive virtual tours in outdoor and/or indoor environments and able to support electronic commerce characterized in that it comprises:
- a website (11) equipped with graphic systems (12) able to reproduce virtually inside the computer, and/or other enabled video system, the external environment (13) and/or the internal environment (14) of the place where the interactive virtual tour and/or electronic commerce take place;
- a database of products (15) for sale in the environment in which electronic commerce takes place, the user can interact with such products as if he was physically in the environment in which electronic commerce takes place;
- an on-line payment system (16) with security protocols (SSL) to transmit confidential information to allow the user to pay in the safest possible products of his choice for make the electronic commerce;
- a delivery system (17) that provides the terms and mode of delivery of selected products for make the electronic commerce;
- management interface (18), protected by an adequate system of authentication, which allows the manager of the environment in which the virtual tour and/or electronic commerce take place to update with high frequency the images of the environment so as to represent the same as possible the real situation,
in such a way as to be a computer system (10) to perform interactive virtual tours and/or electronic commerce able to recreate as much as possible the real situation of the environment in which the interactive virtual tour and/or electronic commerce take place.

## Description

The present invention relates a computer system able to allow interactive virtual tours in outdoor and/or indoor environments and able to support electronic commerce. In particular it is a computer system able to reproduce virtually in the computer the environment in which the user wants to make the interactive virtual tour and/or electronic commerce; the interaction with the environment occurs through 360° panoramic photographic views and/or movies and/or animations.

### PRIOR ART AND BACKGROUND

In the state of art the tools able to introduce the third dimension on the web are mainly two: visualization technologies and interactive 3D objects. Visualization technologies are 360° views that allow the user to move within a virtual environment, but do not allow the user to interact with objects; instead interactive 3D objects offer an extremely realistic representation of the objects, but do not allow the user to move within a virtual environment.

With regard to the electronic commerce, "electronic commerce" refers to the buying and selling of products or services over electronic systems such as the internet. Depending on whether the transaction involves companies rather than individuals, it is possible to distinguish four forms of electronic commerce: business to business (B2B), business to consumer (B2C), consumer to consumer (C2C) and consumer to business (C2B). In particular this invention falls in the field of B2C that is the most popular model of electronic commerce. The expansion of electronic commerce has coincided with the diffusion of the Internet in offices, homes and schools. If one part this new media has enabled companies around the world to come into contact with difficult to reach consumers on the other hand it has opened the possibility to have access to an offer exceptionally broad of products, just sitting in front of the computers.

Until now, however, the traditional electronic commerce websites have a catalog on-line in which, for each product, there is an accurate description text accompanied by one or more images. This solution is very different from the real shopping experience. A customer often need to analyze a product "triggering" a sort of interaction with it, with a simple on-line catalog that is not possible because the objects are neither interactive nor three-dimensional. This is not the only drawback, shopping also involves looking at the windows of stores, wander through the merchandise in the store and so on. Only a system able to represent virtually the environments and the objects in a realistic and accurate way can effectively reproduce the shopping experience.

All the above disadvantages are overcome by the present invention which has as main objective to propose a computer system able to allow interactive virtual tours in outdoor and/or indoor environments and able to support the electronic commerce. Another objective of this computer system is to allow the interaction with the environment in which the interactive virtual tour and/or electronic commerce take place through 360° panoramic photographic views and/or movies and/or animations. A further objective of this computer system is to recreate virtually immersive environments in which the user can move and interact with objects as in the real world.

A further objective is to update with high frequency the representative images of the environment in which the interactive virtual tours and/or electronic commerce take place.

A further objective is to allow virtual navigation in indoor environment from outside of indoor and being able to wander in the whole environment.

Another objective is to ensure affordability and convenience in implementation and management of the computer system.

A further objective is to achieve a much larger public than is normally achievable. Another objective is to obtain an increase in visibility and popularity of the environment virtually reproduced.

### SUMMARY

Form therefore specific object of the present invention a computer system able to allow interactive virtual tours in outdoor and/or indoor environments and able to support electronic commerce characterized in that it comprises:
- a website equipped with graphic systems able to reproduce virtually inside the computer, and/or other enabled video system, the external environment and/or the internal environment of the place where the interactive virtual tour and/or electronic commerce take place;
- a database of products for sale in the environment in which electronic commerce takes place, the user can interact with such products as if he was physically in the environment in which electronic commerce takes place;
- an on-line payment system with security protocols (SSL) to transmit confidential information to allow the user to pay in the safest possible products of his choice for make the electronic commerce;
- a delivery system that provides the terms and mode of delivery of selected products for make the electronic commerce;
- management interface, protected by an adequate system of authentication, which allows the manager of the environment in which the virtual tour and/or electronic commerce take place to update with high frequency the images of the environment so as to represent the same as possible the real situation, in such a way as to be a computer system to perform interactive virtual tours and/or electronic commerce able to recreate as much as possible the real situation of the environment in which the interactive virtual tour and/or electronic commerce take place.

### BRIEF DESCRIPTION OF THE DRAWINGS

The present invention will now be described by way of illustration but not limitation, according to a preferred embodiment, with particular reference to the figures of the annexed drawings in which:
- figure 1 is a block view of the correspondence created by the computer system between real environment and virtual environment in which to make interactive virtual tour and/or electronic commerce;
- figure 2 is a functional block representation of the main components of the computer system that allows interactive virtual tours and/or electronic commerce.
- figure 3 is a schematic view of the computer system and the means by which the interaction in the environment where the user make interactive virtual tours and/or electronic commerce takes place.

### DETAILED DESCRIPTION OF THE INVENTION

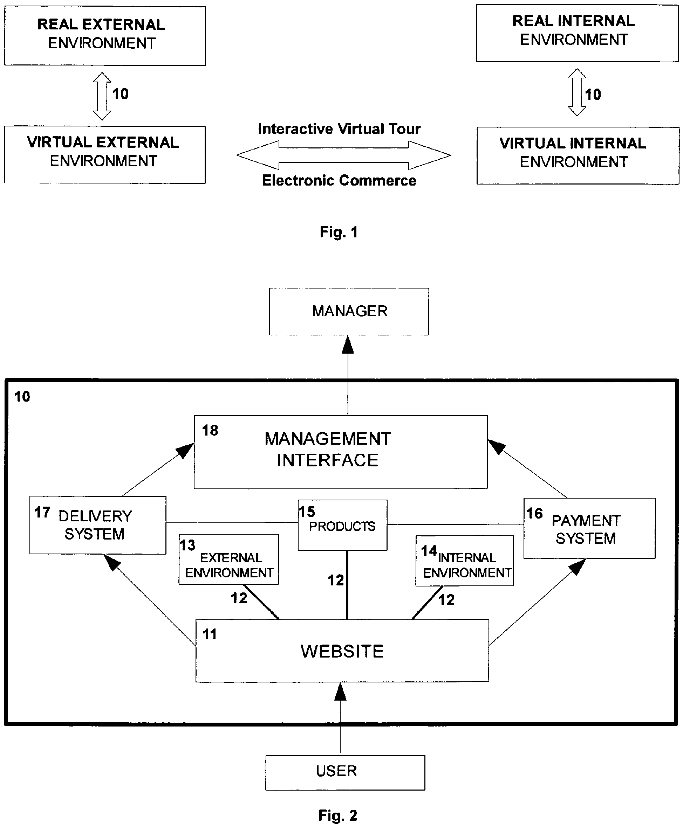

Below will be described for illustrative but not limitative purposes only one of the possible embodiments of the present invention being possible to describe other embodiments on the basis of the particular technical solutions identified. In the various figures the same elements will be indicated with the same identification numbers. Figure 1 shows the correspondence created by the computer system 10 between real environment and virtual environment of the place where the user wants to make the interactive virtual tour and/or electronic commerce. In particular, this correspondence is reflected in the virtual representation inside the computer of the external environment and/or internal environment of the place where the user wants to make the interactive virtual tour and/or electronic commerce; interactive virtual tour and/or electronic commerce can wander both through the external virtual environment, then outdoor, and through the internal virtual environment and/or other enabled video system, then indoor. The environments in which the user can make interactive virtual tours and/or electronic commerce are three-dimensional immersive environments, in which the user can wander and interact with the objects they contain.

Figure 2 shows the block diagram of the computer system 10 that allows to make interactive virtual tours and electronic commerce and in particular the computer system 10 includes the website 11 of the environment in which the user wants to make the interactive virtual tour and/or electronic commerce and the computer system 10 is equipped with graphic systems 12 able to reproduce virtually inside the computer the environment in which the user wants to make the interactive virtual tour and/or electronic commerce and the environment as mentioned above can be an external environment 13, then outdoor, eg roads, squares, parks and gardens, monuments, fairs ... etc., or an internal environment 14, so indoor, eg museums, churches, property for rent, property for sale, shops etc.... The arrangement of objects in virtual environments is perfectly like the arrangement of the corresponding objects in real environments. Regarding in particular the functionality of electronic commerce, always with reference to Figure 2, from the view of the external environment 13 of the place where the user wants to make electronic commerce, eg a shop or a mall or any type of store, the user can enter and continue the interactive virtual tour even in the internal environment 14 of the store. So the user has an experience of buying a product, he can interact with the immersive virtual environment of the store, just as if he was physically in the real store and is thus recreated the atmosphere of shopping. Each product 15 of the store inventory is provided with a proper label with all information necessary to the user to decide whether to proceed with electronic commerce. The products 15 selected for electronic commerce can be moved and eventually placed in the original position if the user decides not to proceed with the electronic commerce; if the choice of products 15 to purchase is confirmed comes into operation the on-line payment system 16 and the on-line payment system 16 provides security protocols such as SSL (Secure Sockets Layer) for transmission of confidential information, to allow the user to pay in the safest possible way the products 15 of his choice. Another security protocol is called SET (Secure Electronic Transaction) and this provides a higher safety standard. The success of electronic commerce is closely related to the ability to perform secure transactions on the network and an adequate level of security brings greater confidence in the purchase by the user. Besides comes into operation the the delivery system 17 that provides the terms and conditions of delivery. Finally, the computer system 10 includes a management interface 18 which allows the manager of the environment in which the virtual tour and/or electronic commerce take place to update with high frequency the images of the environment so as to represent the same as possible the real situation.

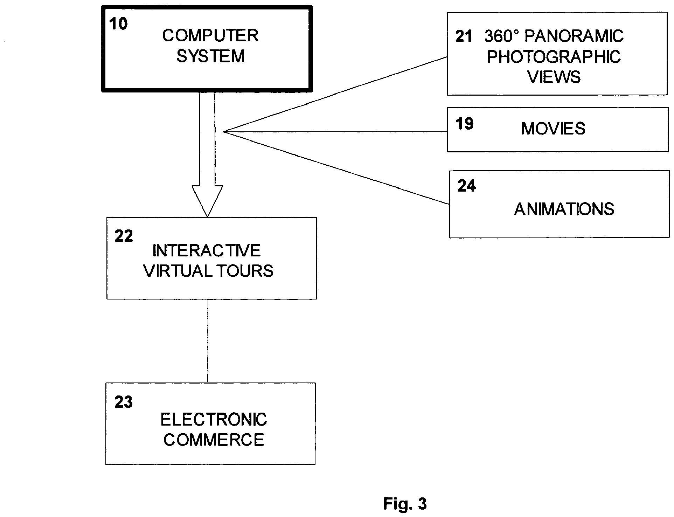

With reference to Figure 3, the computer system 10 as mentioned above is able to allow interactive virtual tours 22 and also able to support electronic commerce 23. In particular, the interaction with the environment in which the user wants to make the interactive virtual tour 22 and/or electronic commerce 23 occurs through 360° panoramic photographic views 21 and/or 19 movies and/or animations 24. The computer system 10 can therefore be seen as an extension of the traditional computer systems that allow the virtual navigation in the images of a real environment. The computer system 10 of the present invention allows to the virtual navigation not to be limited in outdoor environments, eg city streets, but the virtual navigation can wander also in indoor environments, eg property for sale or property for rent. This additional functionality can be exploited eg by the real estate agencies to enable interactive virtual tours in the apartments for sale or apartments for rent. Finally to the functionality of the virtual navigation the computer system 10 adds the interactivity, created through 360° panoramic photographic views and/or movies and/or animations. So that computer system 10 creates immersive environments where the user can wander as if he was physically in the same environment and he can also interact with the objects in the environment.

The above examples demonstrate, therefore, that the present invention achieves all the objectives proposed.

In particular, it proposes a computer system able to allow interactive virtual tours in outdoor and/or indoor environments and able to support the electronic commerce.

In addition this computer system allows the interaction with the environment in which the interactive virtual tour and/or electronic commerce take place through 360° panoramic photographic views and/or movies and/or animations.

Furthermore, this computer system creates virtual immersive environments in which the user can move and interact with objects as in the real world.

In addition it is possible to update with high frequency the representative images of the environment in which the interactive virtual tours and/or electronic commerce take place.

Furthermore it is possible to make the virtual navigation in indoor environment from outside of indoor and being able to wander in the whole environment.

In addition is guaranteed affordability and convenience in implementation and management of the computer system.

Furthermore it is possible to achieve a much larger public than is normally achievable. In addition is obtained an increase in visibility and popularity of the environment virtually reproduced.

The present invention has been described by way of illustration but not limitation, according to a preferred embodiment, it is intended that any changes and/or modifications may be made by experts without leaving out of the scope of protection, as defined by the appended claims.

## Claims

1. A computer system (10) able to allow interactive virtual tours in outdoor and/or indoor environments and able to support electronic commerce **characterized in that** it comprises:
- a website (11) equipped with graphic systems (12) able to reproduce virtually inside the computer, and/or other enabled video system, the external environment (13) and/or the internal environment (14) of the place where the interactive virtual tour and/or electronic commerce take place;
- a database of products (15) for sale in the environment in which electronic commerce takes place, the user can interact with such products as if he was physically in the environment in which electronic commerce takes place;
- an on-line payment system (16) with security protocols (SSL) to transmit confidential information to allow the user to pay in the safest possible products of his choice for make the electronic commerce;
- a delivery system (17) that provides the terms and mode of delivery of selected products for make the electronic commerce;
- management interface (18), protected by an adequate system of authentication, which allows the manager of the environment in which the virtual tour and/or electronic commerce take place to update with high frequency the images of the environment so as to represent the same as possible the real situation,
in such a way as to be a computer system (10) to perform interactive virtual tours and/or electronic commerce able to recreate as much as possible the real situation of the environment in which the interactive virtual tour and/or electronic commerce take place.

2. A computer system (10) able to allow interactive virtual tours in outdoor and/or indoor environments and able to support electronic commerce, according to the preceding claim, **characterized in that**:
- the interactive virtual tour and/or electronic commerce can wander both through the external virtual environment (13), then outdoor, eg roads, squares, parks and gardens, monuments, exhibitions etc ... and through the internal virtual environment (14), then indoor, eg museums, churches, rental properties, properties for sale, shops etc.....

3. A computer system (10) able to allow interactive virtual tours in outdoor and/or indoor environments and able to support electronic commerce, according to one or more of the preceding claims, **characterized in that**:
- the interaction with the environment in which the user wants to make the interactive virtual tour (22) and/or electronic commerce (23) occurs through 360° panoramic views (21) and/or movies (19) and/or animations (24).

4. A computer system (10) able to allow interactive virtual tours in outdoor and/or indoor environments and able to support electronic commerce, according to one or more of the preceding claims, **characterized in that**:
- the environments in which to make interactive virtual tours and/or electronic commerce are three-dimensional immersive environments, in which the user can wander and interact with the objects they contain.

5. A computer system (10) able to allow interactive virtual tours in outdoor and/or indoor environments and able to support electronic commerce, according to one or more of the preceding claims, **characterized in that**:
- the arrangement of objects in virtual environments is perfectly like the arrangement of the corresponding objects in real environments

6. A computer system (10) able to allow interactive virtual tours in outdoor and/or indoor environments and able to support electronic commerce, according to one or more of the preceding claims, **characterized in that**:
- electronic commerce begins outside the store and continues inside the store as if the user was physically in the store, in such a way as to recreate the atmosphere of shopping.

7. A computer system (10) able to allow interactive virtual tours in outdoor and/or indoor environments and able to support electronic commerce, according to one or more of the preceding claims, **characterized in that**:
- each product (15) of the store inventory is equipped with an appropriate label with all information necessary for the client to decide whether to proceed with electronic commerce.

8. A computer system (10) able to allow interactive virtual tours in outdoor and/or indoor environments and able to support electronic commerce, according to one or more of the preceding claims, **characterized in that**:
- if the choice of products (15) to purchase is confirmed comes into operation the on-line payment system (16).

9. A computer system (10) able to allow interactive virtual tours in outdoor and/or indoor environments and able to support electronic commerce, according to one or more of the preceding claims, **characterized in that**:
- the computer system (10) can be exploited eg by real estate agencies to enable interactive virtual tours in the apartments for sale or apartments for rent.
